# EUROPEAN PATENT APPLICATION

(11) **EP 1 993 257 A1**
(43) Date of publication of application: **19.11.2008**
(21) Application number: 07301041.5
(22) Date of filing: 15.05.2007
(51) Int. Cl.: H04L 29/06

(54) **Method for providing secure connectivity to an internal network for a mobile node and related entity**

(71) Applicant: France Télécom, 75015 Paris (FR)
(72) Inventor: Antoine, Stéphane, LONDON, W42PZ (GB)
(74) Representative: Cabinet Plasseraud

(57) **Abstract**

Method for providing secure connectivity to an internal network for a mobile node (MN) roaming in an external network, the internal network supporting Proxy MIP and comprising a home agent (i-HA), the internal network and the external network being connected through a VPN (virtual private network) gateway co-located with a gateway proxy mobile agent (GPMA). The method comprising the following steps:
- performing preliminary actions (18,19,23) for the establishment of a VPN tunnel (25) between the mobile node and the VPN gateway ;
- obtaining at the gateway proxy mobile agent, within the framework of the preliminary actions for the establishment of the VPN tunnel, a home address (HoA) of the mobile node from the home agent; and
- using the home address of the mobile node as an inner address of the VPN tunnel to be established.

## Description

The present invention relates to secure connectivity to an internal network for a mobile node.

While being inside its internal network, a mobile node can communicate securely, because the internal network is generally a trusted network. As an example, if the internal network is a corporate network, an employee using a mobile node can easily access an Intranet.

The same secure connectivity to the internal network would be appreciated when the mobile node is roaming in an external network which may be an untrusted network such as the Internet, for example for an employee who is outside of the enterprise premises.

Several solutions have been proposed to reach this goal. These solutions are based on the use of the Mobile IPv4 protocol as defined in the Request for Comments RFC 3344, "IP Mobility Support for IPv4", published in August 2002 by the Internet Engineering Task Force (IETF).

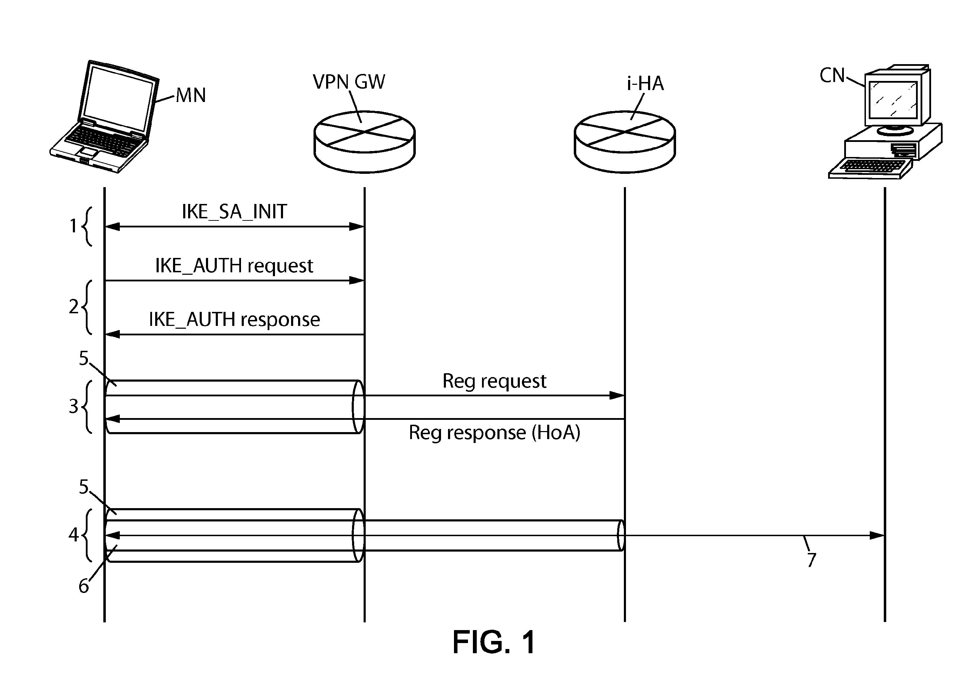

According to a first solution in co-located mode illustrated in FIG.1, a Mobile IP (MIP) tunnel is set up between a mobile node (MN) and its home agent (i-HA for internal home agent) through an external network. This solution has been described in the Internet draft "Secure Connectivity and Mobility using Mobile IPv4 and MOBIKE ; draft-ietf-mip4-mobike-connectivity-03.txt", by V. Devarapalli and P. Eronen, published in March 2007.

To do so, preliminary actions for the establishment of a VPN tunnel, typically an IPsec tunnel, between the MN and a VPN gateway (VPN GW) are first performed. For instance, it is performed security exchanges of the IKE (Internet Key Exchange) protocol defined in the Request for Comments RFC 4306 "Internet Key Exchange (IKEv2) Protocol" published in December 2005 by the IETF.

As shown with references 1 and 2 in FIG.1 and in accordance with the above mentioned RFC 4306, an IKE_SA_INIT exchange may first be performed in particular to negotiate security parameters for the IKE security association, followed by an IKE_AUTH request/response in particular to transmit identities and to prove knowledge of the secrets corresponding to the identities.

At the end of these preliminary actions, a VPN tunnel, e.g. an IPsec tunnel 5, is set up. The MN uses this secured tunnel to register with its i-HA (step 3). In the registration response sent back to the MN, the i-HA includes the MN's home address (HoA) which is the MN's long-term IP address on its home internal network.

A MIP tunnel 6 is further set up between the MN and the i-HA. As it appears in step 4 of FIG.1, the IP traffic 7 sent between the MN and a correspondent node CN is conveyed through this MIP tunnel 6. In addition, the corresponding tunneled datagrams are protected between the VPN GW and the MN by the IPsec tunnel 5.

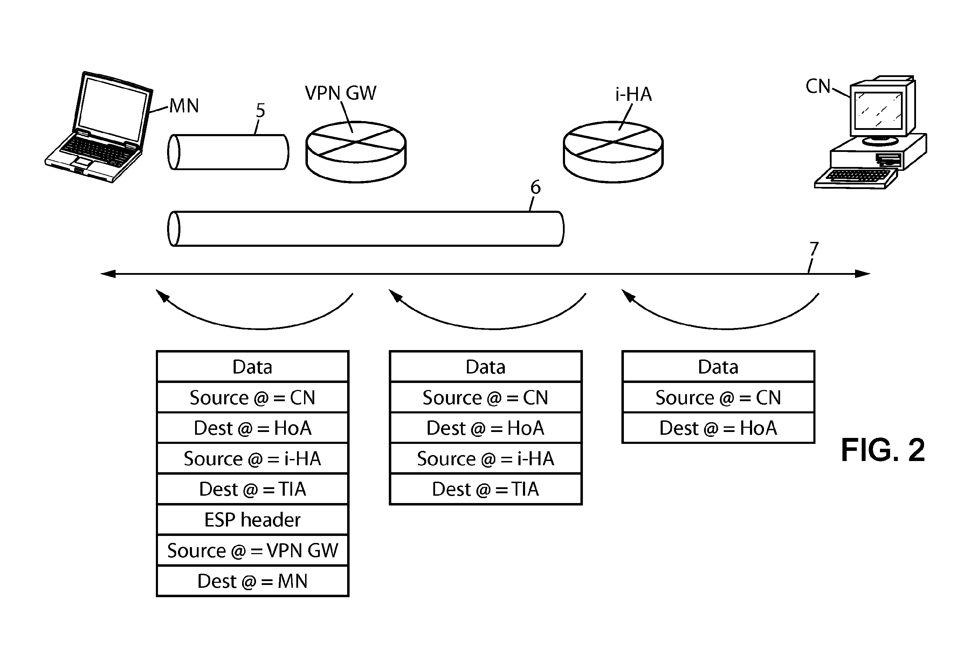

FIG.2 schematically illustrates the format of traffic exchanged on the different portions in this co-located mode solution.

For a downlink packet sent by the CN for the attention of the MN, an encapsulating MIP header is first added by the i-HA. In this MIP header, the destination address is the tunnel inner address (TIA), which is the address that the VPN GW allocates to the MN. Then the VPN GW further adds an outer header to the packet in a classical way.

It comes clearly from FIG.2 that the MIP encapsulation in the VPN tunnel 5 incurs overhead. The same applies in the uplink direction.

To eliminate the tunneling overhead of MIPv4 in the VPN tunnel, a second solution has been proposed. This optimized solution introduces a foreign agent (FA) co-located to the VPN GW. It is described in the Internet draft "Optimizations to Secure Connectivity and Mobility ; draft-meghana-mip4-mobike-optimizations-01" by M. Sahasrabudhe and V. Devarapalli, published in October 2006.

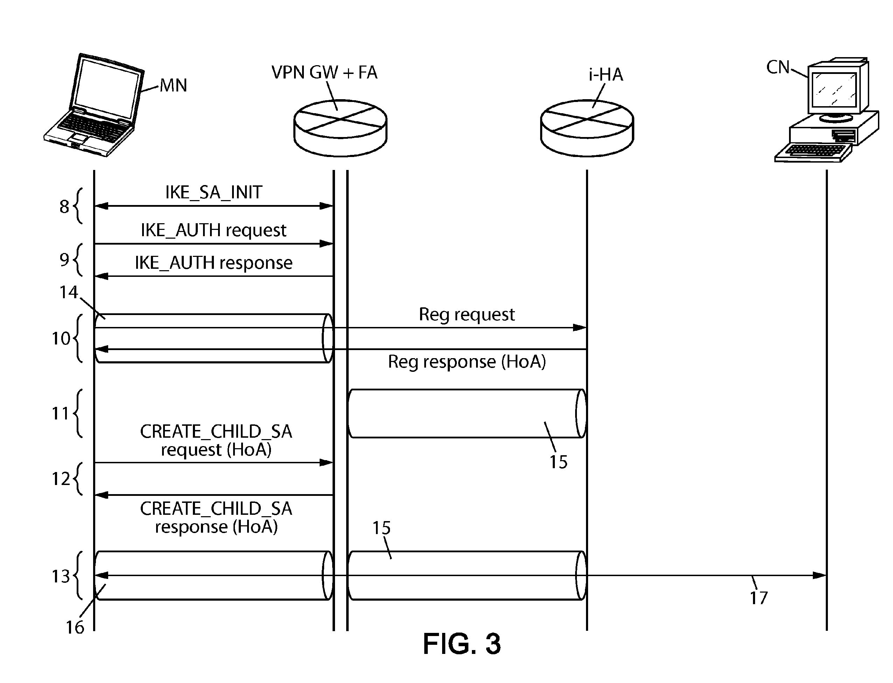

This second solution, which is in care-of-address mode, is illustrated in FIG.3.

Like in the previous solution, the MN initiates an IKE_SA_INIT exchange to create an IKE security association (step 8) and a further IKE_AUTH request/response exchange creates the IPsec security associations for the tunnel inner address TIA which is allocated to the MN by the VPN GW (step 9). At the end of these preliminary actions, a VPN tunnel, typically an IPsec tunnel 14, is set up. Then, the MN registers with its i-HA and obtains its home address HoA (step 10).

In step 11, a MIP tunnel 15 is created between the i-HA and the foreign agent FA.

The TIA is used as an address for all traffic sent through the IPsec tunnel 14. But because a foreign agent functionality exists on the VPN gateway (i.e. an FA is co-located to the VPN GW), the MN must use its HoA as an address on the data traffic and the HoA must be equal to the TIA.

To do so, the MN initiates a CREATE_CHILD_SA exchange to setup new tunnel mode IPsec security associations for the HoA (step 12). The CREATE_CHILD_SA request and response messages are detailed in paragraph 1.3 of the above mentioned RFC 4306 "Internet Key Exchange (IKEv2) Protocol". A new IPsec tunnel 16 is thus set up in replacement of the previous one. The security associations created earlier for the TIA may be either torn down or allowed to expire based on the configuration on the MN and the VPN GW.

Data traffic 17 to and from the HoA can flow protected, between the VPN GW and the MN, by the new IPsec security associations for the HoA. No MIP encapsulation occurs in the new IPsec tunnel 16 (step 13).

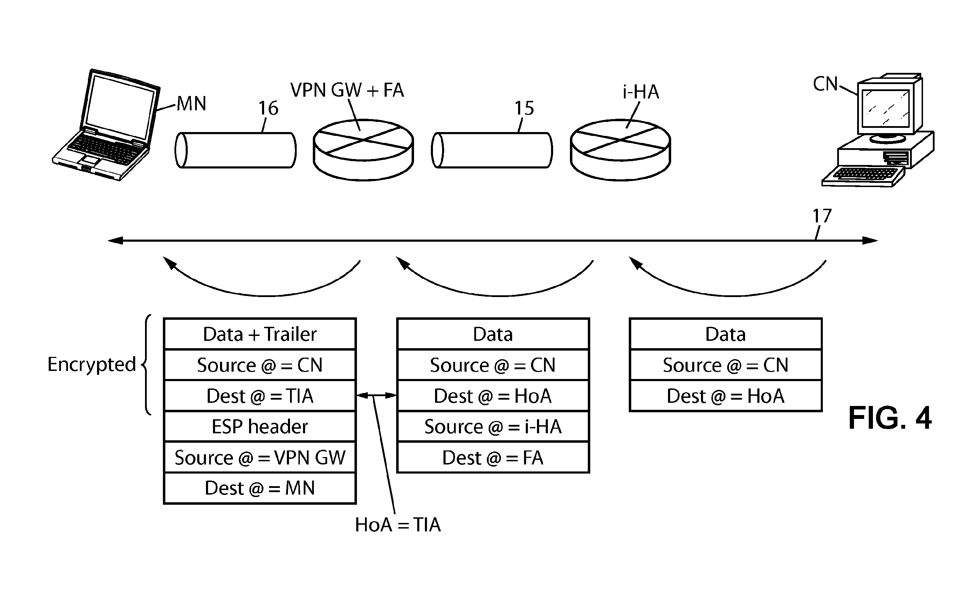

The resulting Mobile IP header reduction in the new IPsec tunnel 16, when the FA is co-located with the VPN GW, appears in FIG.4, by contrast with FIG.2.

FIG.4 shows a downlink flow of data with encapsulating headers from the CN to the MN. As mentioned above, the header reduction that occurs in the VPN tunnel 16 is possible when the TIA is equal to the HoA.

To benefit from the header reduction offered by the de-capsulation achieved by the FA, the source address of the inner header of the encapsulated packets in the VPN tunnel 16 needs to be the HoA for the uplink.

In addition, for the downlink, the destination address of the inner header of the encapsulated packets needs to be the TIA. The selection of the packet to be encrypted is based on the destination address of the inner packet. The IPsec security association is based on the TIA. If the TIA is different from the HoA, the incoming packet will not be protected by the VPN.

A problem with this second solution consisting in first establishing the IPsec security association with the TIA allocated by the VPN GW, and then running a separate CREATE_CHILD_SA exchange to setup a new tunnel mode IPsec security association for the HoA, is that it can be rather long and costly.

Indeed, it will take the time to establish a VPN connection and then the time to register Mobile IP. Moreover, it is only after having obtained both the TIA and the HoA that another IPsec security association (SA) is created with the HoA to be used as the TIA. The latter IPsec SA creation introduces additional delay in the form of an additional CREATE_CHILD_SA message exchange.

An object of the present invention is to alleviate this problem.

The invention proposes a method for providing secure connectivity to an internal network for a mobile node roaming in an external network, the internal network supporting Proxy MIP and comprising a home agent, the internal network and the external network being connected through a VPN (virtual private network) gateway co-located with a gateway proxy mobile agent. The method comprises the following steps:
- performing preliminary actions for the establishment of a VPN tunnel between the mobile node and the VPN gateway ;
- obtaining at the gateway proxy mobile agent, within the framework of the preliminary actions for the establishment of the VPN tunnel, a home address of the mobile node from the home agent; and
- using the home address of the mobile node as an inner address of the VPN tunnel to be established.

Because the home address of the mobile node is obtained at the gateway proxy mobile agent within the framework of the preliminary actions for the establishment of the VPN tunnel (which is made possible by virtue of the Proxy MIP technology), and thus within the same time interval as these preliminary actions, time is saved compared to the second prior art solution described above. Furthermore, there is no need for additional CREATE_CHILD_SA message exchange, which reduces the amount of signaling required.

Moreover, by contrast with the first prior art solution described above, no overhead is needed in the VPN tunnel between the MN and the VPN gateway.

Obtaining the home address of the mobile node from the home agent may result from the gateway proxy mobile agent performing a Proxy MIP registration with the home agent for the mobile node.

Performing preliminary actions for the establishment of the VPN tunnel can comprise performing security exchange of the IKE (Internet Key Exchange) protocol.

In an advantageous embodiment that will be more particularly detailed further, performing preliminary actions for the establishment of the VPN tunnel comprises receiving at the VPN gateway an IKE_AUTH request message from the mobile node and obtaining at the gateway proxy mobile agent, within the framework of the preliminary actions for the establishment of the VPN tunnel, a home address of the mobile node from the home agent results from the gateway proxy mobile agent sending a registration request message for the mobile node to the home agent on reception of the IKE_AUTH request message by the VPN gateway.

In this embodiment, the gateway proxy mobile agent may advantageously receive the home address of the mobile node from the home agent in a registration response message and the VPN gateway may advantageously send said home address to the mobile node in an IKE_AUTH response message on reception of the registration response message by the gateway proxy mobile agent.

According to another aspect, the invention can further make it possible to maintain session continuity and handle mobility for the mobile node, after said VPN tunnel has been established, by detecting that the mobile node has moved to the internal network and deleting said VPN tunnel.

The VPN tunnel deletion can make use of a Mobike delete message as will be described below. This message may be sent from the mobile node to the VPN gateway or from the VPN gateway to the mobile node.

The invention also proposes an entity consisting in a VPN (virtual private network) gateway co-located with a gateway proxy mobile agent, said entity being able to connect an internal network and an external network, the internal network supporting Proxy MIP and comprising a home agent. This entity comprises, with respect to a mobile node roaming in the external network:
- means for taking part in preliminary actions for the establishment of a VPN tunnel with the mobile node ;
- means for obtaining, within the framework of the preliminary actions for the establishment of the VPN tunnel, a home address of the mobile node from the home agent; and
- means for using the home address of the mobile node as an inner address of the VPN tunnel to be established.

This entity may further comprise means for taking part in deletion of said VPN tunnel when it has been detected that the mobile node has moved to the internal network, by exchanging a Mobike delete message with the mobile node.

The invention further proposes a computer program product comprising code instructions for implementing the above mentioned method, when loaded and run on computer means that may be embedded in a single device (like an entity as described above) or distributed among several devices.

The invention also proposes a mobile node having a VPN (virtual private network) tunnel established with a VPN gateway co-located with a gateway proxy mobile agent, the co-located VPN gateway and gateway proxy mobile agent connecting an internal network supporting Proxy MIP and comprising a home agent and an external network. The mobile node comprises means for, after moving to the internal network, deleting said VPN tunnel by sending a Mobike delete message to the VPN gateway.

The preferred features of the above aspects which are indicated by the dependent claims may be combined as appropriate, and may be combined with any of the above aspects of the invention, as would be apparent to a person skilled in the art.
- FIG.1, already discussed, shows a prior art solution in co-located mode for secure connectivity ;
- FIG.2, already discussed, shows a downlink data flow according to the solution of FIG.1 ;
- FIG.3, already discussed, shows a prior art solution in care of address mode for secure connectivity ;
- FIG.4, already discussed, shows a downlink data flow according to the solution of FIG.1 ;
- FIG.5 shows an exemplary architecture of a system capable of carrying out the invention ;
- FIG.6 shows an embodiment for secure connectivity according to the invention ;
- FIG.7 shows a first deletion mode of a pre-established VPN tunnel ; and
- FIG.8 shows a second deletion mode of a pre-established VPN tunnel.

The present invention makes use of the Proxy MIP technology as defined in the Internet draft "Mobility Management using Proxy Mobile IPv4 ; draft-leung-mip4-proxy-mode-02.txt" by K. Leung, G. Dommety, P. Yegani and K. Chowdhury, published in January 2007, rather than the MIP technology by contrast with the prior art described in the introduction.

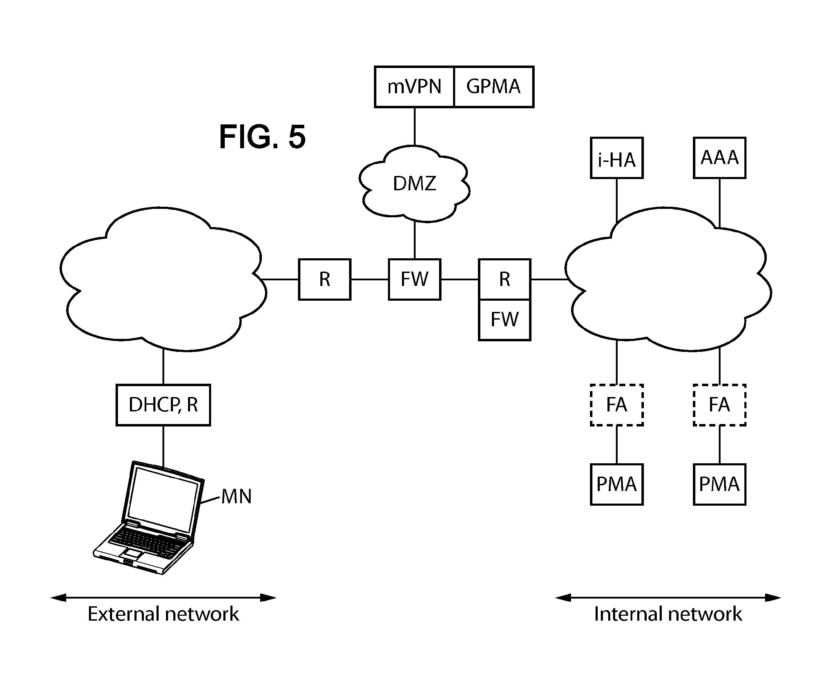

It may take place in a system having an architecture as shown in FIG.5. This architecture involves an internal network and an external network.

The internal network is a trusted network, such as a corporate network. It supports the Proxy MIP technology. It includes an internal home agent i-HA and an AAA infrastructure to perform authentication and authorization of MNs. It also advantageously includes at least one proxy mobility agent PMA which is a network node capable of registering with the i-HA on behalf of MNs. Actually, every access point (AP) or access router (AR) in the internal network may advantageously be a PMA implementing the functionalities of Proxy MIP. Optionally, foreign agents FAs can be part of the internal network. Other nodes may take place between the i-HA and the PMAs as symbolized with the cloud on the right side of FIG.5. The PMAs and the i-HA are not directly accessible from the external network.

The external network can be any kind of network. It is generally an untrusted network, such as the public Internet network. It may include a DHCP (Dynamic Host Configuration Protocol) server as well as a router R. Other nodes may take place in the external network as symbolized with the cloud on the left side of FIG.5.

To provide secure connectivity to the internal network for a mobile node MN whose home network is the internal network, whose home agent is the i-HA and which is roaming in the external network, the internal network and the external network are connected through a VPN gateway, such as a mobile mVPN gateway, co-located with a gateway proxy mobile agent GPMA holding the functions of a PMA of the internal network.

As illustrated in FIG.5, a demilitarized zone DMZ, where security is limited, may be provided between the internal and external networks. These other elements shown in the exemplary architecture of FIG.5 include firewalls FWs and routers Rs between the internal and external networks.

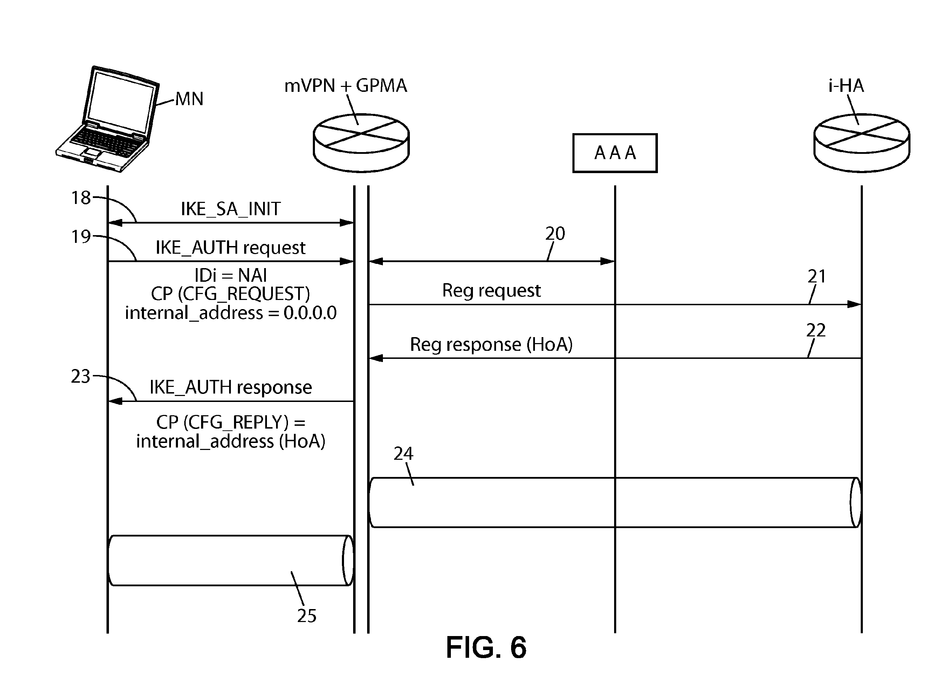

An embodiment of the invention is now described with reference to FIG.6. It aims at providing secure connectivity to the internal network for a MN roaming in the external network. In this way, an employee can maintain his connection with the Intranet of his firm for instance.

Like in the solutions described above, preliminary actions for the establishment of a VPN tunnel between the MN and the mVPN gateway are performed. These preliminary actions comprise advantageously security exchanges of the IKE (Internet Key Exchange) protocol.

Then, a home address HoA of the MN is obtained from the i-HA at the GPMA co-located with the mVPN gateway. This is done within the framework of the preliminary actions for the establishment of the VPN tunnel.

The MN's HoA can then be used as an inner address TIA of the VPN tunnel to be established.

In the embodiment illustrated in FIG.6, an IKE_SA_INIT exchange is first performed (step 18). Then, an IKE_AUTH request message is sent by the MN to the mVPN gateway (step 19). The IDi (identification of initiator) payload of this request advantageously includes a unique identity of the MN (NAI). The IKE_AUTH request message may also contain a CP(CFG_REQUEST) payload, as defined in the above mentioned RFC 4306, containing 0.0.0.0 as an internal address. This indicates that the MN is requesting an IP address from the internal network.

Advantageously, the GPMA, co-located with the mVPN gateway, exchanges AAA messages with the AAA infrastructure of the internal network to perform authentication and authorization of the MN (step 20). As part of this step, the AAA may download MN information such as the i-HA IP address and the security association corresponding to the NAI presented in the IKE_AUTH request message.

The GPMA then sends a registration request message for the MN to the i-HA (step 21). This is possible due to the Proxy MIP support by the GPMA. The i-HA returns the HoA to be allocated to the MN to the GPMA in a registration response message (step 22).

Because the IKE_AUTH request of the VPN tunnel establishment triggers the Proxy MIP registration in this example, the GPMA can thus obtain the MN's HoA within the framework of this preliminary IKE_AUTH exchange.

When the GPMA receives the registration response message with the HoA, the mVPN gateway sends that HoA as an internal address in the GP(CFG_REPLY) payload of an IKE_AUTH response message, as defined in the above mentioned RFC 4306 (step 23).

A MIP tunnel 24 between the i-HA and the GPMA and a VPN tunnel between the MN and the mVPN gateway are finally set up. They can convey traffic between the MN and a correspondent node CN (not represented in FIG.6).

The HoA is used as the inner address TIA of the VPN tunnel 25.

The format of the downlink packets sent to the MN on the different portions are similar to the one shown in FIG.4 (except that FA is replaced by GPMA). The same applies for uplink with the source and destination reversed.

In terms of routing, the GPMA may be configured with the i-HA as its default router. The packets from the MN are de-capsulated by the mVPN gateway, which pass the inner packets to the GPMA. The GPMA reverse tunnel them in IP to the i-HA. Likewise, the packets from the i-HA are de-capsulated by the GPMA and then re-encapsulated in the IPsec tunnel to the MN.

The source address of the registration request message, which is the address of the GPMA, might be a private address. For routing simplifications, most corporate networks would not have any NAT (Network Address Translation) between the GPMA and the i-HA. Encapsulation would then be of the type IP in IP for both forward and reverse tunnels.

It comes from the embodiment described above that no MIPv4 overhead is present in the VPN tunnel between the MN and the mVPN gateway. This is a significant advantage compared to the first prior art solution described in the introduction.

Moreover, obtaining the MN's HoA within the framework of the preliminary actions for the establishment of the VPN tunnel, for example by triggering a Proxy MIP registration upon reception of an IKE_AUTH request message by the mVPN gateway makes it easy to assign the MN's HoA as the VPN TIA. It also avoids creating two successive VPN tunnels (the HoA is obtained before the VPN tunnel is established) as well as corresponding MIP signalling (CREATE_CHILD_SA exchange) between the mVPN gateway and the MN, by contrast with the second prior art solution described in the introduction. This represents a gain in terms of time and cost.

It will also be noted that the invention may reduce the amount of signalling that would be necessary if Dynamic Host Configuration Protocol (DHCP) was used to obtain the HoA after starting the establishment of the VPN connection.

According to further aspects of the invention, session continuity may be maintained and mobility may be handled.

The embodiment described above can be achieved to allow the MN to maintain its current session when moving from the internal network to an external network.

If the MN moves within the external network and its access network changes, it may use the Mobike protocol, as defined in the Internet standard "IKEv2 Mobility and Multihoming Protocol (MOBIKE); draft-ietf-mobike-protocol-08.txt" by P. Eronen, published in February 2006, to update the mVPN gateway of its current address.

When the MN is connected to the same mVPN gateway, the GPMA still maintains a valid binding cache entry at the i-HA. The i-HA is not aware of the MN's movement as long as the MN is attached to the same mVPN gateway and the GPMA address remains the same.

In order to maintain session continuity of the MN as it moves, the Home Address (HoA) stays unchanged.

If the MN had to change mVPN gateway, the new GPMA would update the i-HA with the new care of address.

If the MN disconnects from the mVPN gateway or attaches a different mVPN gateway, it advantageously re-connects and obtains the same VPN TIA as the previous one. This will allow sessions to survive VPN disconnection as the mobility bindings for the MN's HoA at the i-HA have remained in spite of the VPN disconnection.

It also may happen that the MN roaming in an external network moves to the internal network. This may be detected for example as follows.

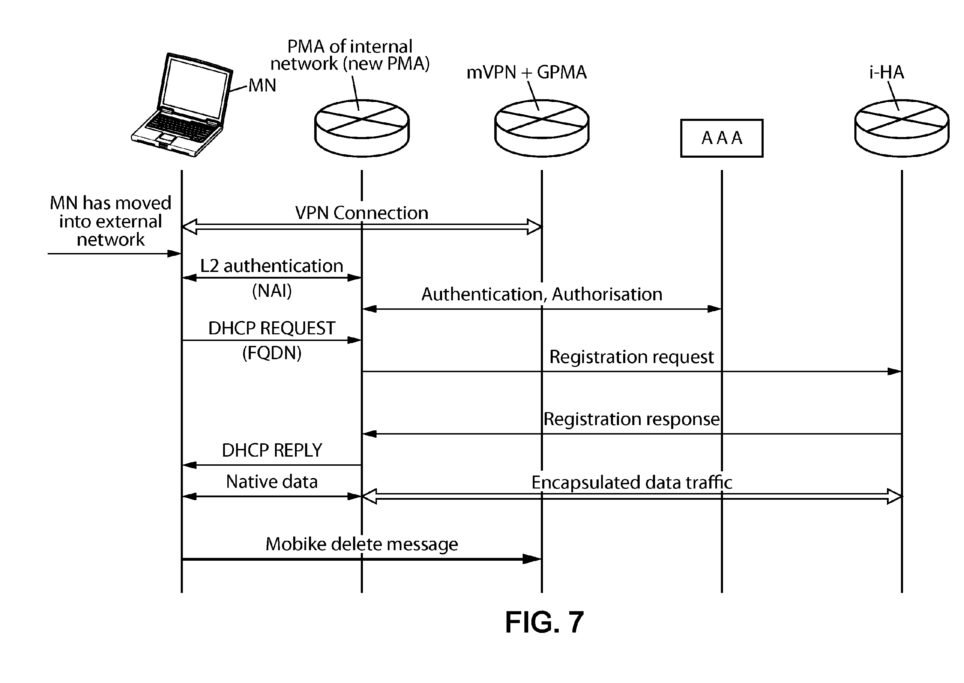

The MN performs network access authentication on the internal network which has become available. During this authentication, the MN presents its NAI to a PMA access router of the internal network (see e.g. top of FIG.7). Alternatively, if network access authentication is not required, a client Fully Qualified Domain Name (FQDN) sub-option presents the MN's FQDN to the access router as described in Request for Comments RFC 4702 "The Dynamic Host Configuration Protocol (DHCP) Client ; Fully Qualified Domain Name (FQDN) Option", published in October 2006. In this case, assuming that in each PMA of the internal network, there exists a mapping between the FQDN and the NAI, the MN will be identified by that mapping. Such mapping table will be presented further.

The access router which is also a PMA then sends a proxy registration request message for the MN's NAI to the i-HA address.

Once it has been detected that the mobile node has moved to the internal network, the VPN tunnel may be torn down, i.e. deleted, because in the internal network, the MN does not use the VPN tunnel to send and receive traffic. The deletion of the VPN tunnel may be achieved as follows.

The security associations that were used to protect the traffic between the MN and the mVPN gateway can be deleted. To that end, the MN can send to the mVPN gateway a delete message (with address 0.0.0.0) of the Mobike protocol, as defined in the above mentioned Internet standard "IKEv2 Mobility and Multihoming Protocol (MOBIKE) ; draft-ietf-mobike-protocol-08.txt".

The MN may have to re-negotiate IKE security association (SA) to prevent the IKE SA from expiring. This negotiation can be done through the old network if it is still available or through the internal network if the mVPN gateway is reachable from the internal network.

The MN may initiate the deletion of the IPsec SA (and thus of the VPN tunnel) for the MN's HoA on the mVPN gateway by sending the Mobike delete message. This is shown in the example illustrated in FIG.7.

As shown in FIG.7, sending the Mobike delete message may result from the MN receiving native unprotected data to its HoA (which may be considered as an indication that the MN is in the internal network).

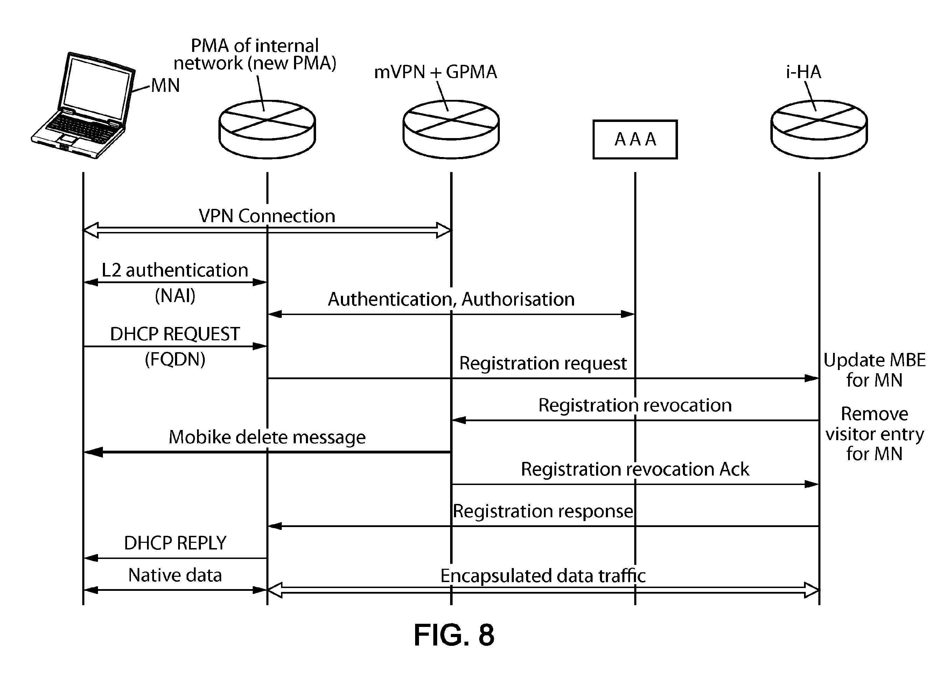

Alternatively, the deletion of the IPsec SA (and thus of the VPN tunnel), on the MN, may be initiated by the mVPN gateway. In this case, the reception of a Proxy MIP registration revocation message by the GPMA co-located with the mVPN gateway may be used as an indication to trigger the deletion of the VPN tunnel. The Mobike message may indeed be sent to the MN on reception of the registration revocation message by the GPMA. This is shown in the example illustrated in FIG.8.

When in the internal network, the MN can have its mobility handled and session continuity maintained by Proxy MIP with the i-HA serving as the mobility anchor. This is in accordance with what the above mentioned Internet draft "Mobility Management using Proxy Mobile IPv4 ; draft-leung-mip4-proxy-mode-02.txt" describes.

The relevant PMA of the internal network maintains a valid binding cache entry at all times at the i-HA, mapping the HoA to a current care of address CoA (which is the address of the PMA or of an FA). Whenever the MN attaches a new PMA, the PMA sends a registration request to update the binding cache entry for that MN

After having moved to the internal network, it may happen that the MN moves back to the external network. In this case, the MN may re-establish the VPN connection with possibly the old IKE SA it had before tearing down the tunnel mode IPsec SAs (VPN tunnel). The MN may not have to re-negotiate the IKE SA if it has maintained the VPN states alive in the mVPN gateway while it was receiving traffic directly from the internal network.

In the embodiment described above, it has been assumed that the MN presents its NAI identifier during network access to retrieve the MN's security associations that will protect the proxy registration (see e.g. 19 in FIG.6). This may not be the case however. To that end, each PMA in the internal network may contain a data structure of elements, where each element associates the Fully Qualified Domain Name (FQDN) of each user with the NAI of that user. In this way, it is possible to retrieve the NAI of a user's MN when the PMA receives a DHCP request from that user's MN containing the FQDN option as defined in the above mentioned RFC 4702. A mapping table may be used for this purpose, containing for each user a corresponding couple of values (FQDN ; NAI).

Although an embodiment of the invention has been particularly described, it may be varied in many ways without departing from the invention as defined in the claims.

All or part of the operations described above can be carried out by virtue of a computer program including appropriate code instructions. This program can be loaded and run on computer means of a single device, e.g. an entity including the co-located mVPN gateway and GPMA, or a plurality of devices in a distributed fashion.

## Claims

1. A method for providing secure connectivity to an internal network for a mobile node (MN) roaming in an external network, the internal network supporting Proxy MIP and comprising a home agent (i-HA), the internal network and the external network being connected through a VPN (virtual private network) gateway co-located with a gateway proxy mobile agent (GPMA), the method comprising the following steps:
- performing preliminary actions (18,19,23) for the establishment of a VPN tunnel (25) between the mobile node and the VPN gateway ;
- obtaining at the gateway proxy mobile agent, within the framework of the preliminary actions for the establishment of the VPN tunnel, a home address (HoA) of the mobile node from the home agent; and
- using the home address of the mobile node as an inner address of the VPN tunnel to be established.

2. The method as claimed in claim 1, wherein obtaining at the gateway proxy mobile agent (GPMA), within the framework of the preliminary actions (18,19,23) for the establishment of the VPN tunnel (25), a home address (HoA) of the mobile node (MN) from the home agent (i-HA) results from the gateway proxy mobile agent performing a Proxy MIP registration (21-22) with the home agent for the mobile node.

3. The method as claimed in claim 1 or 2, wherein performing preliminary actions (18,19,23) for the establishment of the VPN tunnel (25) comprises performing security exchange of the IKE (Internet Key Exchange) protocol.

4. The method as claimed in any one of the foregoing claims, wherein performing preliminary actions (18,19,23) for the establishment of the VPN tunnel (25) comprises receiving at the VPN gateway an IKE_AUTH request message (19) from the mobile node (MN) and wherein obtaining at the gateway proxy mobile agent (GPMA), within the framework of the preliminary actions for the establishment of the VPN tunnel, a home address (HoA) of the mobile node from the home agent (i-HA) results from the gateway proxy mobile agent sending a registration request message (21) for the mobile node to the home agent on reception of the IKE_AUTH request message by the VPN gateway.

5. The method as claimed in claim 4, wherein the gateway proxy mobile agent (GPMA) receives the home address (HoA) of the mobile node (MN) from the home agent (i-HA) in a registration response message (22) and wherein the VPN gateway sends said home address to the mobile node in an IKE_AUTH response message (23) on reception of the registration response message by the gateway proxy mobile agent.

6. The method as claimed in any one of the foregoing claims, further comprising the following steps for maintaining session continuity and handling mobility for the mobile node (MN), after said VPN tunnel (25) has been established:
- detecting that the mobile node has moved to the internal network ; and
- deleting said VPN tunnel.

7. The method as claimed in claim 6, wherein detecting that the mobile node (MN) has moved to the internal network comprises the following steps performed at a proxy mobile agent of the internal network:
- receiving, from the mobile node, a DHCP request including a FQDN identifier of the mobile node;
- retrieving a NAI identifier of the mobile node from said FQDN identifier, by use of a mapping table;
- sending a registration request to the home agent (i-HA) for the mobile node identified by said NAI identifier.

8. The method as claimed in claim 6 or 7, wherein deleting said VPN tunnel (25) comprises the mobile node (MN) sending a Mobike delete message to the VPN gateway.

9. The method as claimed in claim 8, wherein the Mobike delete message is sent to the VPN gateway on reception of native unprotected data by the mobile node (MN) to its home address (HoA).

10. The method as claimed in claim 6 or 7, wherein deleting said VPN tunnel (25) comprises the VPN gateway sending a Mobike delete message to the mobile node (MN).

11. The method as claimed in claim 10, wherein the Mobike delete message is sent to the mobile node (MN) by the VPN gateway on reception of a Proxy MIP registration revocation message by the gateway proxy mobile agent (GPMA).

12. An entity consisting in a VPN (virtual private network) gateway co-located with a gateway proxy mobile agent (GPMA), said entity being able to connect an internal network and an external network, the internal network supporting Proxy MIP and comprising a home agent (i-HA), said entity comprising, with respect to a mobile node (MN) roaming in the external network:
- means for taking part in preliminary actions (18,19,23) for the establishment of a VPN tunnel (25) with the mobile node ;
- means for obtaining, within the framework of the preliminary actions for the establishment of the VPN tunnel, a home address (HoA) of the mobile node from the home agent; and
- means for using the home address of the mobile node as an inner address of the VPN tunnel to be established.

13. The entity as claimed in claim 12, further comprising means for taking part in deletion of said VPN tunnel (25) when it has been detected that the mobile node (MN) has moved to the internal network, by exchanging a Mobike delete message with the mobile node.

14. A computer program product comprising code instructions for implementing the method as claimed in any one of claims 1 to 11, when loaded and run on computer means.

15. A mobile node (MN) having a VPN (virtual private network) tunnel (25) established with a VPN gateway co-located with a gateway proxy mobile agent (GPMA), the co-located VPN gateway and gateway proxy mobile agent connecting an internal network supporting Proxy MIP and comprising a home agent (i-HA) and an external network, the mobile node comprising means for, after moving to the internal network, deleting said VPN tunnel by sending a Mobike delete message to the VPN gateway.
